# EUROPEAN PATENT SPECIFICATION

(11) **EP 3 620 409 B1**
(45) Date of publication and mention of the grant of the patent: **08.11.2023**
(21) Application number: 18797813.5
(22) Date of filing: 28.04.2018
(51) Int. Cl.: B65G 35/00, B65G 1/137, B66F 9/06, B66F 9/075, B66F 9/10, B66F 9/12, B25J 5/00, B65G 1/04

(54) **BATCH-BASED PICKING ROBOT**
CHARGENBASIERTER KOMMISSIONIERROBOTER
ROBOT DE PRÉPARATION PAR LOTS

(30) Priority: 09.05.2017 US 201762503328 P
(43) Date of publication of application: 11.03.2020
(73) Proprietor: RRS Supply Chain Technology Co., Ltd., Qingdao, Shandong 266000 (CN)
(72) Inventor: GUO, Qing, Hangzhou, Zhejiang 310028 (CN); ZHANG, Tong, Bellevue, Washington 98008 (US); GUO, Weiwen, Bellevue, Washington 98008 (US)
(74) Representative: Grosfillier, Philippe
(86) International application number: PCT/CN2018/085007
(87) International publication number: WO 2018/205859

(56) References cited:
- EP-A1- 3 192 616
- EP-A2- 0 302 205
- CN-A- 105 883 317
- CN-A- 106 276 095
- CN-U- 202 518 714
- CN-U- 204 916 842
- CN-U- 205 466 224
- CN-U- 205 616 047
- CN-U- 205 675 712
- CN-U- 205 772 105
- DE-B- 1 198 285
- FR-A2- 2 615 778
- JP-A- H01 176 706
- JP-A- 2013 136 442
- JP-A- 2014 091 369

## Description

### FIELD OF THE INVENTION

This invention relates generally to a robotic system. More particularly, the present invention relates to an automatic batch picking robot and a method of using the same.

### BACKGROUND OF THE INVENTION

US patent 9,519,284 discloses "goods to man" approach. It takes an entire rack, with tens of inventories, to pickers or a picking location. This approach carries empties spaces in the rack and only uses a fraction of the inventories spaces in the rack. Such a solution is of low automation, high labor cost, no batch processing, and therefore yield less efficiency picking.

JP H01 176706 A discloses a robotic system according to the preamble of claim 1. In particular, the document discloses a loading shelf and a transfer tool for taking out and inserting articles to and from the loading shelf.

EP 3 192 616 A1 discloses a robot adapted to pick up and transport objects comprising, a base plate, a drive unit, pick up unit and a shelf unit. In this system the drive unit, the pick up unit and the shelf unit are positioned on the base plate.

To counter the issues from the above solution, it's necessary to design a robot that can process batch efficiently.

### SUMMARY OF THE INVENTION

The said invention is to solve a technical challenge, which will provide a batch processing robot system, improving the picking efficiency.

The invention is defined in claim 1.

The technical design of the said invention:
A robotic system comprising:
a vehicle comprising:
a plurality of wheels;
a driving assembly;
a platform;
a robot mounted on the platform of the vehicle; and
a first removable rack mounted on the platform of the vehicle;
wherein the wheels are under the platform; and
wherein the driving assembly installed in the front of the platform; and
wherein the vehicle is to move on the ground; and
wherein the robot is to pick up the first removable rack to or from the platform; and
wherein the robot is to pick up the items on the first removable rack;

Compared to the current technology, the said invention's advantages: the said robotic system can process batches of items in different sizes and weights; flexible picking, highly automated, and much more efficient.

The said invention has more improvements:
The robotic system further comprising a second removable rack mounted on the platform of the vehicle;
wherein the first removable rack is closer to the driving assembly than the second removable rack; and
wherein the robot is between the first removable rack and the second removable rack.

Furthermore, the robot of the robotic system is a fork-shaped lifter comprising a base rotatable about a first direction, the base comprising a first slot and a second slot parallel to the first slot, the first slot being perpendicular to the first direction;
a first pole translating along the first slot;
a second pole translating along the second slot;
a frame translating along the first direction, the frame being directly mounted on the first pole and the second pole;
a first fork prong directly mounted on the frame; and
a second fork prong directly mounted on the frame, the second fork prong being parallel to the first fork prong;
wherein a width between the first fork prong and the second fork prong is adjustable.

According to one embodiment of the invention, the fork-shaped lifter is characterized by a rest condition in which
the first pole is located at a proximal end of the first slot; and
the second pole is located at a proximal end of the second slot; and
an operational condition in which
the first pole is located at a distal end of the first slot; and
the second pole is located at a distal end of the second slot.

The base is preferably of a cylinder shape.

In another embodiment, the robotic system comprises a balance weight in the base and wherein the fork-shaped lifter is characterized by
the rest condition in which
an outer surface of the balance weight is aligned with a side surface of the base; and the operational condition in which
the balance weight extends away from the side surface of the base by a distance along a direction opposite a longitudinal direction of the first fork prong; by adjusting the moving distance of the balance weight, the center gravity of the loading assembly filled with cargo is maintained at the center of the base.

In another embodiment, the fork-shaped lifter further comprises a weight scale configured to measure a weight of a bin, a pallet, the first removable rack or the second removable rack; and wherein the weight sensor is mounted on the first pole or second pole of the fork-shaped lifter.

In another embodiment, the robotic system further comprising a sensor assembly configured to sense an identification number of the bin, the pallet, the first removable rack or the second removable rack.

### BRIEF DESCRIPTION OF THE DRAWINGS

FIG.1 is a perspective view of a robotic system not according to the invention.
FIG.2 is a perspective view of another robotic system in examples of the present disclosure.
FIG.3 is a perspective view of a fork-shaped lifter in examples of the present disclosure.
FIG.4 is a perspective view of another fork-shaped lifter in examples of the present disclosure.
FIG.5 is a flowchart of a method to move an item from a stationary rack to a removable rack in examples of the present disclosure.
FIG.6 is a flowchart of a method to move a plurality of items from a stationary rack to a designated location in examples of the present disclosure.
FIG.7 is a flowchart of another method to move a plurality of items from a first stationary rack to a second stationary rack in examples of the present disclosure.

### DETAILED DESCRIPTION OF THE INVENTION

The invention is further described below with reference to the drawings and embodiments.

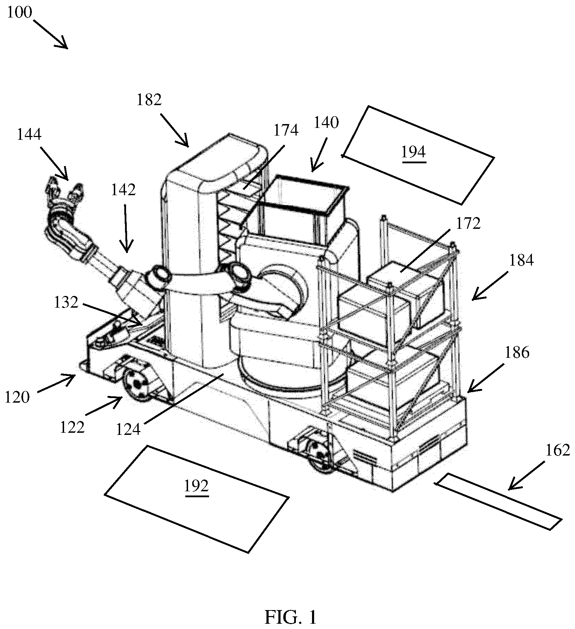

As shown in FIG.1, a batch picking robot 100 not according to the invention includes a moving device 120, a loading and unloading device 140, a first movable shelf 182 and a second movable shelf 184. The mobile device 120 is a mobile robot, which includes a plurality of wheels 122, a driving assembly 132, and a platform 124. The mobile device 120, the first movable shelf 182 and the second movable shelf 184 are all mounted on the platform 124. Specifically, the driving component 132 may be an engine or a motor module. The first movable shelf 182 is closer to the driving component 132 than the second movable shelf 184, and the loading / unloading device 140 is disposed between the first movable shelf 182 and the second movable shelf 184. The batch picking robot 100 further includes a plurality of locks 186 for locking or unlocking the first movable shelf 182 and the second movable shelf 184. In this embodiment, the loading / unloading device 140 is a manipulator robot, which includes a robot arm 142 provided with a gripper 144.

The loading and unloading device 140 picks up the first movable shelf 182, and then places the first movable shelf 182 in the first buffer area 192. The loading and unloading device 140 unlocks the lock 186, and then the loading and unloading device 140 picks up the second movable shelf 184 and places the second movable shelf 184 in the second buffer area 194. The mobile device 120 may be a driverless vehicle and may be moved on the floor by markers or wires 162, or navigated using vision, magnets, or lasers.

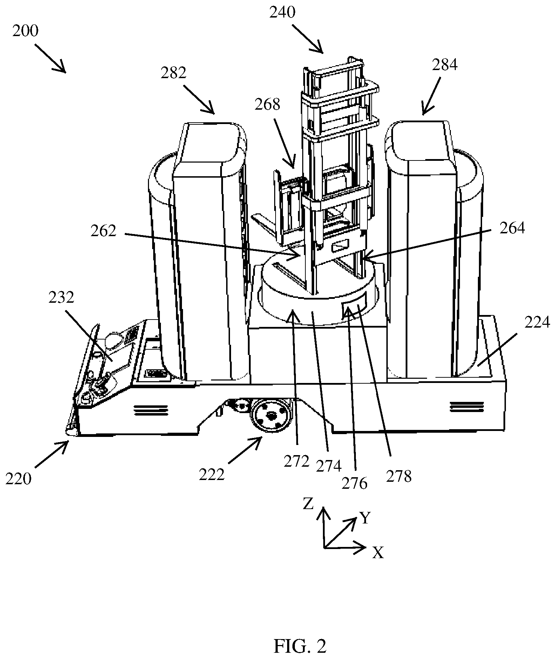

As shown in FIG.2 to FIG.3, it is a batch picking robot 200 according to the invention. The batch picking robot 200 includes a moving device 220, a loading and unloading device 240, a first movable shelf 282, and a second movable shelf 284. The mobile device 220 is a mobile robot, which includes a plurality of wheels 222, a driving assembly 232, and a platform 224. The mobile device 220, the first movable shelf 282, and the second movable shelf 284 are all mounted on the platform 224. Specifically, the driving component 232 may be an engine or a motor module. The first movable shelf 282 is closer to the driving component 232 than the second movable shelf 284, and the loading / unloading device 240 is disposed between the first movable shelf 282 and the second movable shelf 284.

In this embodiment, the loading and unloading device 240 is a fork-shaped elevator, which includes a base 272, a first support rod 262, a second support rod 264, a frame 268, a first fork claw 362, and a second fork claw 364. The base 272 is provided with a first sliding groove 372 and a second sliding groove 374 parallel to the first sliding groove 372, and the first sliding groove 372 and the second sliding groove 374 are disposed on an XY plane perpendicular to the Z axis. The first supporting rod 262 can move linearly along the first sliding groove 372, and the second supporting rod 264 can move linearly along the second sliding groove 374. The frame 268 is directly mounted on the first fork claw 362 and the second fork claw 364, and the frame 268 can move linearly along the Z axis. The first fork claw 362 is parallel to the second fork claw 364. The distance 392 between the first fork claw 362 and the second fork claw 364 can be adjusted through the frame 268. The base 272 is cylindrical to facilitate its rotation.

The loading / unloading device 240 has a first state, a second state, a third state, and a fourth state. In the first state, the front side of the loading / unloading device 240 faces the first movable shelf 282. In the second state, the base 272 rotates 90 ° from the first state so that the front side of the loading / unloading device 240 faces the first fixed shelf 302 or the first buffer area 192 (FIG.1). In the third state, the base 272 rotates 180 ° from the first state so that the front side of the loading / unloading device 240 faces the second movable shelf 284. In the fourth state, the base 272 rotates 270 ° from the first state so that the front side of the loading / unloading device 240 faces the second fixed shelf 304 or the second buffer area 194 (FIG.1).

The loading and unloading device 240 picks up the first movable shelf 282, and then places the first movable shelf 282 in the first buffer area 192. The loading and unloading device 240 picks up the second movable shelf 284, and then places the first movable shelf 284 in the second buffer area 194. The mobile device 220 may be a driverless vehicle, and may be moved on the floor by a marker or wire 162 (FIG.1), or navigated using vision, magnets, or lasers.

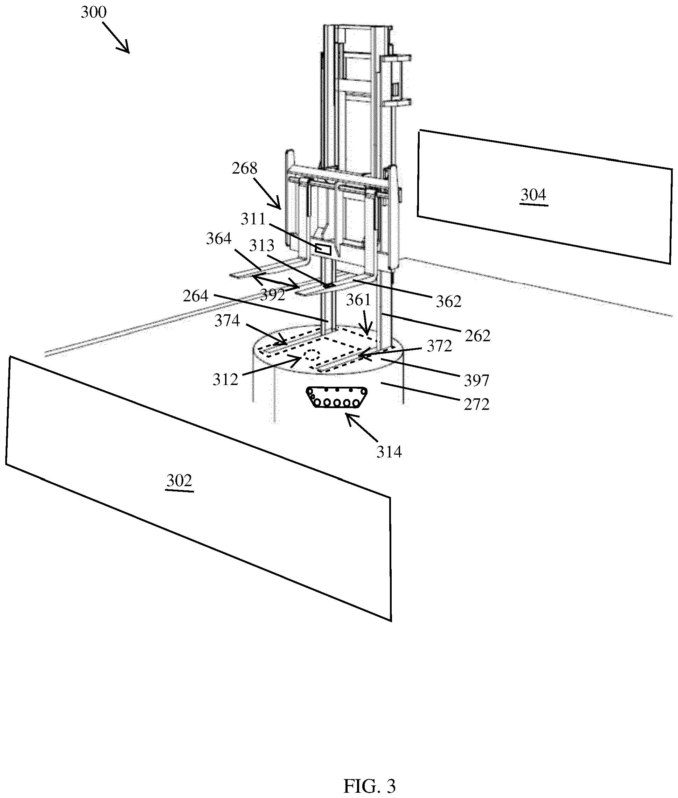

As shown in FIG.3, in the resting state, the loading / unloading device 240 projects on the top surface 397 of the base 272 in the Z-axis direction to form a projection image 361, and the projection image 361 is located in the top surface 397 of the base 272.

Therefore, when the moving device 220 moves along the wire 162, the free ends of the first fork claw 362 and the second fork claw 364 do not touch an external object. In the working state, the free ends of the first fork claw 362 and the second fork claw 364 extend beyond the outside of the base 272. The fashion unloading device 240 projects a projection image 361 on the top surface 397 of the base 272 in the Z-axis direction. Not within the top surface 397 of the base 272. The loading and unloading device 240 may extract the packages 172 and the trays 174 from the first fixed rack 302 or the second fixed rack 304.

The loading and unloading device 240 further includes a motor assembly 312 and a track 314. The motor assembly drives the track 314 to drive the first support rod 262 and the second support rod 264 to move along the first sliding groove 372 and the second sliding groove 374, respectively. The motor assembly 312 drives the base 272 for rotation, and the track 314 moves similarly to the tank track. The first fork claw 362 and the second fork claw 364 are used to grasp the package 172, the tray 174, the first movable rack 182, or the second movable rack 184.

The package 172, the tray 174, the first movable shelf 182, and the second movable shelf 184 are provided with identification tags (RFID, barcode or two-dimensional code), and the loading and unloading device 240 further includes a reading device for reading the identification tags. 311. The reading device 311 may be an RFID reader to scan the identification tag, and the reading device 311 may also be a barcode or a two-dimensional code reader to scan the identification tag. The loading and unloading device 240 further includes a weight sensing device 313 for measuring the weight of the package 172, the tray 174, the first movable shelf 182, or the second movable shelf 184. The reading device 311 is located on the vertical surface of the frame 268, and the weight sensing device 313 is disposed on the horizontal surface of the first fork claw 362 and the second fork claw 364.

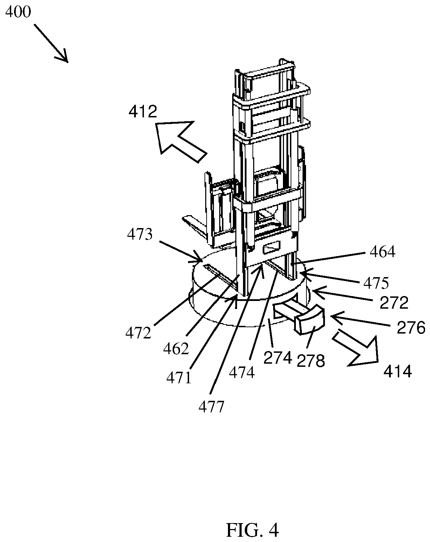

As shown in FIG.4, it is another embodiment of the loading and unloading device 400. The loading / unloading device 400 has two states of a rest state and an operation state. In the resting state, the first fork claw 462 is located at the proximal end 471 of the first sliding groove 472 and the second fork claw 464 is located at the proximal end 475 of the second sliding groove 474. In the working state, the first fork claw 462 is located at the distal end 473 of the first sliding groove 472, and the second fork claw 464 is located at the distal end 477 of the second sliding groove 474. The first fork claw 462 and the second fork claw 464 extend in the forward direction 412 direction.

The loading and unloading device 400 further includes a balance weight 276. In the resting state, the outer surface 278 of the balance weight 276 is aligned with the circular arc surface 274 of the base 272. In the working state, the balance block 276 extends in the rearward direction 414, so that the rear surface 278 of the balance block 276 extends outward beyond the arc surface 274 of the base 272 by a distance. The distance that the weight 276 extends rearward is proportional to the weight of the package 172, the tray 174, the first movable shelf 182, or the second movable shelf 184. By adjusting the moving distance of the balance block 276, the center of gravity of the loading / unloading device 400 filled with the cargo is maintained at the center of the base 272. Therefore, the stress on the base 272 during the rotation is reduced. The mass of the balance weight 276 is between 1 kg and 10 kg, and may also be between 10 kg and 100 kg.

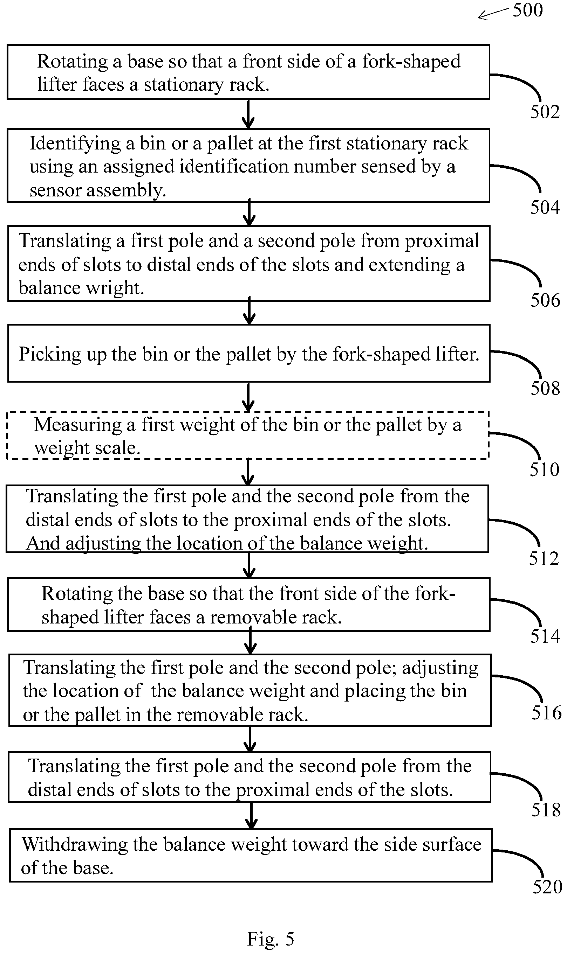

As shown in FIG.5, a flow method 500 for moving goods from a fixed shelf to a mobile shelf is started in step 502.

In step 502, the base 272 is rotated so that the front side of the loading / unloading device 240 faces the first fixed shelf 302. In another implementation, the front side of the loading / unloading device 240 begins to face the first movable shelf 282, and then the base 272 rotates by 90 ° so that the front side of the loading / unloading device 240 faces the first fixed shelf 302. The first fixed shelf 302 is located outside the batch picking robot 200. The first fixed shelf 302 does not move with the moving device 220.

In step 504, the parcel 172 on the first fixed shelf 302 and the identification label on the tray 174 are scanned and read by the reading device 311.

In step 506, the loading and unloading device 240 moves in the forward direction 412, and the first fork claw 462 and the second fork claw 464 move from the proximal end 471 of the first sliding groove 472 and the proximal end 475 of the second sliding groove 474, respectively. To the distal end 473 of the first sliding groove 474 and the distal end 477 of the second sliding groove 474. The balance weight 276 extends in the rearward direction 414, so that the rear surface 278 of the balance weight 276 extends outward beyond the arc surface 274 of the base 272 by a distance. The weight of the package 172 or the tray 174 is measured and recorded, and the movement of the balance weight 276 maintains the center of gravity of the loading / unloading device 400 for loading the package 172 or the tray 174 at the center of the base 272. In another embodiment, the weight of the package 172 or the tray 174 is not measured and recorded, and the distance that the balance weight 276 moves is a fixed value (for example, 50 cm, 1 m, or 2 m).

In step 508, the loading / unloading device 240 picks up the package 172 or the tray 174.

In step 510, the weight of the package 172 or the tray 174 is measured by the weight sensing device 313. Step 510 is an optional step (indicated by a dashed line). The weight of the package 172 or the tray 174 can be measured and recorded.

In step 512, the first fork claw 462 and the second fork claw 464 are moved from the distal end 473 of the first sliding groove 472 and the distal end 477 of the second sliding groove 474 to the proximal end 471 and the first sliding groove 472, respectively. Proximal end 475 of two sliding grooves 474. The position of the balance weight 276 is adjusted so that the center of gravity of the loading / unloading device 400 for loading the package 172 or the pallet 174 is maintained at the center of the base 272.

In step 514, the base 272 rotates so that the front side of the loading / unloading device 240 faces the movable shelf (the first movable shelf 282).

In step 516, the first fork claw 462 and the second fork claw 464 are moved from the proximal end 471 of the first sliding groove 472 and the proximal end 475 of the second sliding groove 474 to the distal end 473 of the first sliding groove 474, respectively. And the distal end 477 of the second sliding slot 474. The position of the balance weight 276 is adjusted so that the center of gravity of the loading / unloading device 400 for loading the package 172 or the pallet 174 is maintained at the center of the base 272. The loading / unloading device 240 puts the package 172 or the tray 174 into a movable rack (the first movable rack 282).

In step 518, the first fork claw 462 and the second fork claw 464 are moved from the distal end 473 of the first sliding groove 472 and the distal end 477 of the second sliding groove 474 to the proximal end 471 and the second sliding groove 472, respectively. The proximal end 475 of the sliding slot 474.

In step 520, the balance block 276 retracts the base 272 toward the circular arc surface 274, so that the rear surface 278 of the balance block 276 is aligned with the circular arc surface 274.

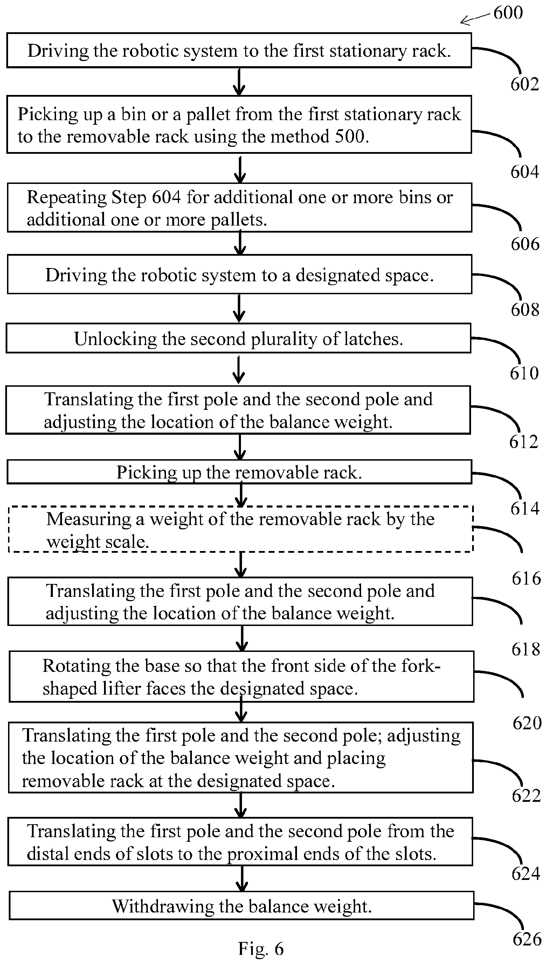

As shown in FIG.6, a flow method 600 for moving goods from a fixed shelf to a buffer space is started in step 602.

In step 602, the batch picking robot 200 moves to the first fixed shelf 302.

In step 604, the loading / unloading device 240 picks up the package 172 and the tray 174 on the first fixed shelf 302 to the movable shelf (the first movable shelf 282 or the second movable shelf 284).

In step 606, step 604 is repeated to add one or more packages or pallets.

In step 608, the loading / unloading device 240 unloads the goods to the buffer space 192.

In step 610, the lock fasteners of a plurality of fixed shelves are unlocked.

In step 612, the loading and unloading device 240 moves in the forward direction 412 direction, and the first fork claw 462 and the second fork claw 464 are respectively from the proximal end 471 of the first sliding groove 472 and the proximal end 475 of the second sliding groove 474. Move to the distal end 473 of the first sliding groove 474 and the distal end 477 of the second sliding groove 474. The position of the balance weight 276 is adjusted so that the center of gravity of the loading / unloading device 400 for loading the movable shelf is maintained at the center of the base 272.

In step 614, the loading / unloading device 240 picks up the movable shelf.

In step 616, the weight of the movable shelf is measured by the weight sensing device 313. Step 616 is optional (indicated by the dashed line). Removable shelves containing packages and pallets can be measured and recorded.

In step 618, the first fork claw 462 and the second fork claw 464 move from the distal end 473 of the first sliding groove 472 and the distal end 477 of the second sliding groove 474 to the proximal end 471 and the second sliding groove 472, respectively. The proximal end 475 of the sliding slot 474. The position of the balance weight 276 is adjusted so that the center of gravity of the loading / unloading device 400 for loading the movable shelf is maintained at the center of the base 272.

In step 620, the base rotates and rotates so that the front side of the loading / unloading device 240 faces the buffer area.

In step 622, the first fork claw 462 and the second fork claw 464 are moved from the proximal end 471 of the first sliding groove 472 and the proximal end 475 of the second sliding groove 474 to the distal end 473 and the first of the first sliding groove 474, respectively. The distal end 477 of the two sliding grooves 474. The position of the balance weight 276 is adjusted so that the center of gravity of the loading / unloading device 400 for loading the movable shelf is maintained at the center of the base 272. The loading and unloading device 240 places a movable shelf in a buffer area.

In step 624, the first fork claw 462 and the second fork claw 464 are moved from the distal end 473 of the first sliding groove 472 and the distal end 477 of the second sliding groove 474 to the proximal end 471 and the second sliding groove 472, respectively. The proximal end 475 of the sliding slot 474.

In step 626, the balance block 276 retracts the base 272 toward the circular arc surface 274, so that the rear surface 278 of the balance block 276 is aligned with the circular arc surface 274.

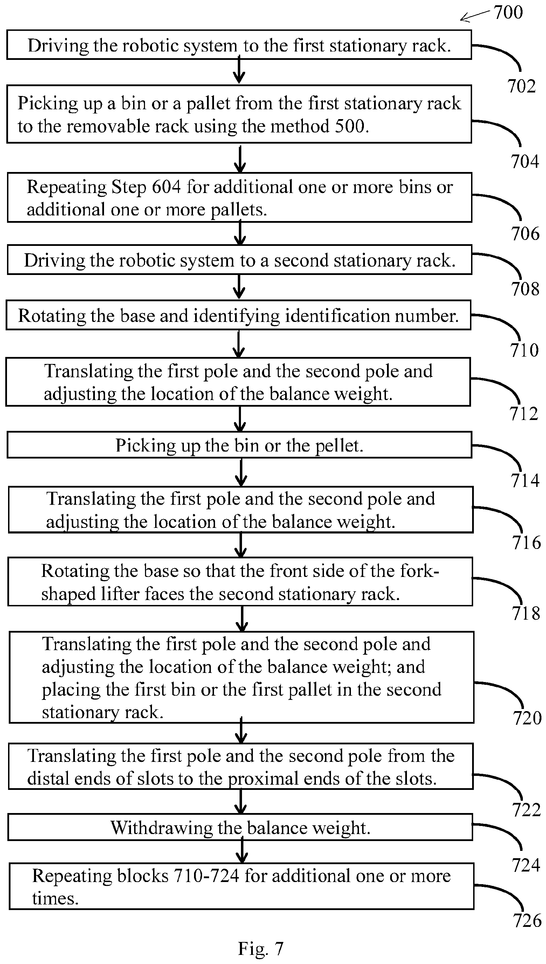

As shown in FIG.7, a flow method 700 for moving goods from a first fixed shelf to a second fixed shelf is started in step 702.

In step 702, the batch picking robot 200 moves to the first fixed shelf 302.

n step 704, the loading / unloading device 240 picks up the package 172 and the tray 174 on the first fixed shelf 302 to the movable shelf (the first movable shelf 282 or the second movable shelf 284).

In step 706, step 704 is repeated to add one or more packages or trays.

In step 708, the loading / unloading device 240 is moved to the second fixed shelf 304.

In step 710, the base is rotated so that the front side of the loading / unloading device 240 faces the movable shelf, and the packages 172 and the identification tags on the tray 174 on the movable shelf are scanned and read by the reading device 311.

In step 712, the loading and unloading device 240 moves in the forward direction 412, and the first fork claw 462 and the second fork claw 464 move from the proximal end 471 of the first sliding groove 472 and the proximal end 475 of the second sliding groove 474, respectively. To the distal end 473 of the first sliding groove 474 and the distal end 477 of the second sliding groove 474. The movement of the balance weight 276 maintains the center of gravity of the loading / unloading device 400 for loading the package 172 or the pallet 174 at the center of the base 272.

In step 714, the loading / unloading device 240 picks up the package 172 or the pallet 174.

In step 716, the first fork claw 462 and the second fork claw 464 are moved from the distal end 473 of the first sliding groove 472 and the distal end 477 of the second sliding groove 474 to the proximal end 471 and the first sliding groove 472, respectively. Proximal end 475 of two sliding grooves 474. The position of the balance weight 276 is adjusted so that the center of gravity of the loading / unloading device 400 for loading the package 172 or the pallet 174 is maintained at the center of the base 272.

In step 718, the base 272 rotates so that the front side of the loading / unloading device 240 faces the second fixed shelf 304.

In step 720, the first fork claw 462 and the second fork claw 464 are moved from the proximal end 471 of the first sliding groove 472 and the proximal end 475 of the second sliding groove 474 to the distal end 473 of the first sliding groove 474, respectively. And the distal end 477 of the second sliding slot 474. The position of the balance weight 276 is adjusted so that the center of gravity of the loading / unloading device 400 for loading the package 172 or the pallet 174 is maintained at the center of the base 272. The loading and unloading device 240 places the package 172 or the tray 174 on the second fixed rack 304.

In step 722, the first fork claw 462 and the second fork claw 464 are moved from the distal end 473 of the first sliding groove 472 and the distal end 477 of the second sliding groove 474 to the proximal end 471 and the second sliding groove 472, respectively. The proximal end 475 of the sliding slot 474.

In step 724, the balance block 276 retracts the base 272 toward the circular arc surface 274, so that the rear surface 278 of the balance block 276 is aligned with the circular arc surface 274.

In step 726, steps 710-724 are repeated multiple times.

Compared with the prior art, the present invention has the beneficial effects that the batch picking robot can greatly increase the picking height, make full use of the warehouse volume, and achieve targeted goods to people, improve the sorting efficiency, and reduce losses and waste.

## Claims

1. A robotic system (200) comprising:
a vehicle (220) comprising:
a plurality of wheels (222);
a driving assembly (232);
a platform (224);
a robot (240) mounted on the platform (224) of the vehicle (220) ;
a first removable rack (282) mounted on the platform (224) of the vehicle (220);
wherein the wheels (222) are under the platform (224); and
wherein the driving assembly (232) is installed in the front of the
platform (224); and
wherein the vehicle (220) is to move on the ground; and
wherein the robot (240) is to pick up the first removable rack (282) to or from
the platform (224); and
wherein the robot (240) is to pick up the items on the first removable rack (282);
**characterized by** the fact that
the robotic system (200) further comprises a second removable rack (282) mounted on the platform (224) of the vehicle (220);
wherein the first removable rack (282) **is** closer to the driving assembly (232) than the second removable rack (284); and
wherein the robot (240) is between the first removable rack (282) and the second removable rack (284);
wherein the robot (240) is a fork-shaped lifter comprising a base (272) rotatable about a first direction, the base (272) comprising a first slot (372, 472) and a second slot (374, 474) parallel to the first slot (372, 472), the first slot (372, 472) being perpendicular to the first direction;
a first pole (262, 462) translating along the first slot (372,472)
a second pole (264, 464) translating along the second slot (374, 474);
a frame (268) translating along the first direction, the frame (268) being directly mounted on the first pole (262, 462) and the second pole (264, 464);
a first fork prong (362) directly mounted on the frame (268); and
a second fork prong (364) directly mounted on the frame (268), the second fork prong (364) being parallel to the first fork prong (362);
wherein a width between the first fork prong (362) and the second fork prong (364) is adjustable.

2. The robotic system (200) of claim 1, wherein the fork-shaped lifter is **characterized by**
a rest condition in which
the first pole (262, 462) is located at a proximal end of the first slot (372, 472); and
the second pole (264, 464) is located at a proximal end of the second slot (374, 474); and
an operational condition in which
the first pole (262, 462) is located at a distal end of the first slot (372, 472);
and the second pole (264, 464) is located at a distal end of the second slot (374, 474).

3. The robotic system (200) of claim 1, wherein the base (272) further comprises a balance weight (276) and wherein the fork-shaped lifter is **characterized by** the rest condition in which an outer surface (278) of the balance weight is aligned with a side surface of the base (272); and the operational condition in which the balance weight (276) extends away from the side surface of the base (272) by a distance along a direction opposite a longitudinal direction of the first fork prong (362); by adjusting the moving distance of the balance weight (276), the center of gravity of the loading assembly filled with cargo is maintained at the center of the base (272).

4. The robotic system (200) of claim 1, wherein the fork-shaped lifter further comprises a weight scale configured to measure a weight of a bin, a pallet, the first removable rack (282) or the second removable rack (284); and
wherein the weight sensor is mounted on the first pole (262, 462) or second pole (264, 464) of the fork-shaped lifter.

5. The robotic system (200) of claim 1 further comprising a sensor assembly configured to sense an identification number of the bin, the pallet, the first removable rack (282) or the second removable rack (284).

## Patentansprüche

1. Robotersystem (200), umfassend:
ein Fahrzeug (220), das Folgendes umfasst:
mehrere Räder (222);
eine Antriebsanordnung (232);
eine Plattform (224);
einen auf der Plattform (224) des Fahrzeugs (220) montierten Roboter (240);
ein auf der Plattform (224) des Fahrzeugs (220)montiertes erstes entfernbares Gestell (282);
wobei sich die Räder (222) unter der Plattform (224) befinden; und
wobei die Antriebsanordnung (232) im Vorderteil der Plattform (224) installiert ist; und
wobei sich das Fahrzeug (220) auf dem Boden bewegen soll; und
wobei der Roboter (240) das erste entfernbare Gestell (282) auf die und von der Plattform (224) aufnehmen soll; und
wobei der Roboter (240) die Gegenstände auf dem ersten entfernbaren Gestell (282) aufnehmen soll;
**dadurch gekennzeichnet, dass**
das Robotersystem (200) ferner ein auf der Plattform (224) des Fahrzeugs (220) montiertes zweites entfernbares Gestell (282) umfasst;
wobei sich das erste entfernbare Gestell (282) näher an der Antriebsanordnung (232) befindet als das zweite entfernbare Gestell (284); und
wobei sich der Roboter (240) zwischen dem ersten entfernbaren Gestell (282) und dem zweiten entfernbaren Gestell (284) befindet;
wobei der Roboter (240) eine gabelförmige Hebevorrichtung ist, die Folgendes umfasst:
eine in einer ersten Richtung drehbare Basis (272), wobei die Basis (272) einen ersten Schlitz (372, 472) und einen zweiten Schlitz (374, 474) parallel zum ersten Schlitz (372, 472) umfasst, wobei der erste Schlitz (372, 472) senkrecht zur ersten Richtung verläuft;
eine erste Stange (262, 462), die sich translatorisch entlang dem ersten Schlitz (372, 472) bewegt;
eine zweite Stange (264, 464), die sich translatorisch entlang dem zweiten Schlitz (374, 474) bewegt;
einen Rahmen (268), der sich translatorisch entlang der ersten Richtung bewegt, wobei der Rahmen (268) direkt an der ersten Stange (262, 462) und der zweiten Stange (264, 464) montiert ist;
eine erste Gabelzinke (362), die direkt an dem Rahmen (268) montiert ist; und
eine zweite Gabelzinke (364), die direkt an dem Rahmen (268) montiert ist; wobei die zweite Gabelzinke (364) parallel zur ersten Gabelzinke (362) ist;
wobei eine Breite zwischen der ersten Gabelzinke (362) und der zweiten Gabelzinke (364) einstellbar ist.

2. Robotersystem (200) nach Anspruch 1, wobei die gabelförmige Hebevorrichtung durch Folgendes gekennzeichnet ist:
einen Ruhezustand, in dem
sich die erste Stange (262, 462) an einem proximalen Ende des ersten Schlitzes (372, 472) befindet; und
sich die zweite Stange (264, 464) an einem proximalen Ende des zweiten Schlitzes (374, 474) befindet; und
einen Betriebszustand, in dem
sich die erste Stange (262, 462) an einem distalen Ende des ersten Schlitzes (372, 472) befindet; und
sich die zweite Stange (264, 464) an einem distalen Ende des zweiten Schlitzes (374, 474) befindet.

3. Robotersystem (200) nach Anspruch 1, wobei die Basis (272) ferner Folgendes umfasst:
ein Ausgleichsgewicht (276), und wobei die gabelförmige Hebevorrichtung **gekennzeichnet ist durch** den Ruhezustand, in dem eine Außenfläche (278) des Ausgleichsgewichts auf eine Seitenfläche der Basis (272) ausgerichtet ist; und
den Betriebszustand, in dem sich das Ausgleichsgewicht (276) um eine Strecke entlang einer einer Längsrichtung der ersten Gabelzinke (362) entgegengesetzten Richtung von der Seitenfläche der Basis (272) weg erstreckt;
durch Einstellung der Bewegungsstrecke des Ausgleichsgewichts (276) der Schwerpunkt der mit der Ladung gefüllten Ladeanordnung in der Mitte der Basis (272) gehalten wird.

4. Robotersystem (200) nach Anspruch 1, wobei die gabelförmige Hebevorrichtung ferner eine Waage umfasst, die dazu konfiguriert ist, ein Gewicht eines Behälters, einer Palette, des ersten entfernbaren Gestells (282) oder des zweiten entfernbaren Gestells (284) zu messen; und
wobei der Gewichtssensor an der ersten Stange (262, 462) oder zweiten Stange (264, 464) der gabelförmigen Hebevorrichtung montiert ist.

5. Robotersystem (200) nach Anspruch 1, ferner umfassend eine Sensoranordnung, die dazu konfiguriert ist, eine Identifikationsnummer des Behälters, der Palette, des ersten entfernbaren Gestells (282) oder des zweiten entfernbaren Gestells (284) zu erfassen.

## Revendications

1. Système robotique (200) comprenant :
un véhicule (220) comprenant :
une pluralité de roues (222) ;
un ensemble d'entraînement (232) ;
une plate-forme (224) ;
un robot (240) monté sur la plate-forme (224) du véhicule (220) ;
un premier support amovible (282) monté sur la plate-forme (224) du véhicule (220) ;
les roues (222) se trouvant sous la plate-forme (224) ; et
l'ensemble d'entraînement (232) étant installé à l'avant de la plate-forme (224) ; et
le véhicule (220) devant se déplacer sur le sol ; et
le robot (240) devant collecter le premier support amovible (282) vers ou depuis la plate-forme (224) ; et
le robot (240) devant prendre les articles sur la première étagère amovible (282) ;
**caractérisé en ce que**
le système robotique (200) comprend en outre un second support amovible (282) monté sur la plate-forme (224) du véhicule (220) ;
le premier support amovible (282) étant plus proche de l'ensemble d'entraînement (232) que le second support amovible (284) ; et
le robot (240) se trouvant entre le premier support amovible (282) et le second support amovible (284) ;
le robot (240) étant un appareil de levage en forme de fourche comprenant
une base (272) pouvant tourner autour d'une première direction, la base (272) comprenant une première fente (372, 472) et une seconde fente (374, 474) parallèle à la première fente (372, 472), la première fente (372, 472) étant perpendiculaire à la première direction ;
un premier montant (262, 462) se déplaçant le long de la première fente (372, 472) ;
un second montant (264, 464) se déplaçant le long de la seconde fente (374, 474) ;
un cadre (268) se déplaçant le long de la première direction, le cadre (268) étant monté directement sur le premier montant (262,462) et le second montant (264, 464) ;
une première dent de fourche (362) montée directement sur le cadre (268) ; et
une seconde dent de fourche (364) montée directement sur le cadre (268), la seconde dent de fourche (364) étant parallèle à la première dent de fourche (362) ;
la largeur entre la première dent de fourche (362) et la seconde dent de fourche (364) étant réglable.

2. Système robotique (200) selon la revendication 1, l'appareil de levage en forme de fourche étant **caractérisé par**
un état de repos dans lequel
le premier montant (262, 462) est situé au niveau d'une extrémité proximale de la première fente (372, 472) ; et
le second montant (264, 464) est situé au niveau d'une extrémité proximale de la seconde fente (374, 474) ; et
un état fonctionnel dans lequel
le premier montant (262, 462) est situé à une extrémité distale de la première fente (372, 472) ; et
le second montant (264, 464) est situé à une extrémité distale de la seconde fente (374, 474).

3. Système robotique (200) selon la revendication 1, la base (272) comprenant en outre une masse d'équilibrage (276) et l'appareil de levage en forme de fourche étant **caractérisé par**
l'état de repos dans lequel
une surface extérieure (278) de la masse d'équilibrage est alignée avec une surface latérale de la base (272) ; et
l'état fonctionnel dans lequel
la masse d'équilibrage (276) s'étend à l'opposé de la surface latérale de la base (272) sur une distance le long d'une direction opposée à une direction longitudinale de la première dent de fourche (362) ; en ajustant la distance de déplacement de la masse d'équilibrage (276), le centre de gravité de l'ensemble de chargement rempli de marchandise est maintenu au centre de la base (272).

4. Système robotique (200) selon la revendication 1, l'appareil de levage en forme de fourche comprenant en outre une balance conçue pour mesurer le poids d'un bac, d'une palette, du premier support amovible (282) ou du second support amovible (284) ; et
le capteur de poids étant monté sur le premier montant (262, 462) ou le second montant (264, 464) de l'appareil de levage en forme de fourche.

5. Système robotique (200) selon la revendication 1 comprenant en outre un ensemble de capteurs conçu pour détecter un numéro d'identification du bac, de la palette, du premier support amovible (282) ou du second support amovible (284).
